**Europäisches Patentamt**

**European Patent Office**

**Office européen des brevets**

(19)

(11) Veröffentlichungsnummer: **0 087 036**
**B1**

(12) **EUROPÄISCHE PATENTSCHRIFT**

(45) Veröffentlichungstag der Patentschrift:
**03.07.85**

(51) Int. Cl.⁴: **B 29 D 23/00**

(21) Anmeldenummer: **83101106.9**

(22) Anmeldetag: **05.02.83**

(54) **Verfahren zur Herstellung von masshaltigen Rohren aus aliphatischen Polyamiden zur Förderung von Kraftstoffen für Verbrennungsmotoren.**

(30) Priorität: **20.02.82 DE 3206131**
**25.11.82 DE 3243612**

(43) Veröffentlichungstag der Anmeldung:
**31.08.83 Patentblatt 83/35**

(45) Bekanntmachung des Hinweises auf die Patenterteilung:
**03.07.85 Patentblatt 85/27**

(84) Benannte Vertragsstaaten:
**CH DE FR GB IT LI NL SE**

(56) Entgegenhaltungen:
**CH - A - 500 831**
**DE - C - 976 270**

(73) Patentinhaber: **CHEMISCHE WERKE HÜLS AG, - RSP Patente / PB 15 - Postfach 13 20, D-4370 Marl 1 (DE)**

(72) Erfinder: **Michel, Klaus, Julius-Wegener-Strasse 17, D-4370 Marl (DE)**
Erfinder: **Gude, Armin, Jupiterweg 2, D-4370 Marl (DE)**

## Beschreibung

Die Erfindung betrifft ein Verfahren zur Herstellung von masshaltigen Rohren nach dem ersten Teil des Anspruchs. Rohrleitungen aus Polyamiden werden bekanntlich als Förderleitungen für Kraftstoffe für Verbrennungsmotoren eingesetzt. Besonders vorteilhaft sind hierbei aliphatische, gegebenenfalls Weichmacher enthaltende Polyamide. Das sind Polyamide aus dem Grundbaustein Lactam oder $\omega$-Aminocarbonsäure mit mindestens fünf Kohlenstoffatomen pro Carbonamidgruppe, wie Polyamid 6, Polyamid 8, Polyamid 11 oder Polyamid 12 oder solche aus äquivalenten Mengen von aliphatischen Dicarbonsäuren und aliphatischen Diaminen mit zusammen mindestens 12 Kohlenstoffatomen, wie Polyamid 66, Polyamid 68, Polyamid 69, Polyamid 610, Polyamid 612.

Es hat sich gezeigt, dass derartige Kraftstoffleitungen aus besagten Polyamiden durch die Einwirkung von Kraftstoffen für Verbrennungsmotoren, insbesondere durch solche Kraftstoffe, die Alkohole enthalten oder aus Alkoholen bestehen, eine Längenausdehnung erfahren. Diese Längenausdehnung kann in der Grössenordnung von einigen Prozenten liegen. Infolge dieser Längenausdehnung hängen die Leitungen zwischen den Befestigungselementen girlandenförmig durch, was als ein Sicherheitsrisiko zu betrachten ist.

Aus der DE-C-976 270 ist ein Verfahren zur Herstellung von Rohren aus Polyamid durch Extrudieren bekannt, bei dem ein Rohr mit einem über dem Sollmass liegenden Durchmesser ohne erste Kalibrierung extrudiert wird und nach dem Abkühlen und Wiedererwärmen durch eine Kalibriereinrichtung mit kleinerem Kaliber als dem Solldurchmesser geleitet wird. Das nach dem Abkühlen erhaltene Rohr wird einer Nachkonditionierung durch Wärme- und Wasserbehandlung unterworfen.

Nach dem Verfahren des Standes der Technik werden keine masshaltigen Rohre erhalten, da sowohl die Spannungen im extrudierten Rohr als auch im kalibrierten Rohr durch die Wärmebehandlung aufgehoben werden. Beim Gebrauch solcher Rohre als Kraftstoffleitungen treten die unerwünschten Längenausdehnungen auf.

Aufgabe der Erfindung ist es, ein Verfahren bereitzustellen, welches es erlaubt, Rohre herzustellen, die bei der Förderung von Kraftstoffen oder alkoholhaltigen Kraftstoffen oder Kraftstoffen aus Alkoholen für Verbrennungsmotoren masshaltig sind, die also keine nachträgliche Längenausdehnung erfahren.

Die Lösung der Aufgabe gelingt mit einem gattungsgemassen Verfahren, wenn man die Polyamidschmelze zunächst zu einem Rohr mit einem über dem Sollmass liegenden Durchmesser extrudiert, diesen Durchmesser des Rohres durch Kalibrieren und Abkühlen fixiert, das abgekühlte Rohr durch eine zweite Kalibriereinrichtung mit einem kleineren Kaliber als dem Solldurchmesser des Rohres ohne äussere Wärmezufuhr hindurchleitet, so dass die dabei eingebrachten Longitudinalspannungen beim Gebrauch durch die eindiffundierenden Kraftstoffbestandteile gerade soweit aufgehoben werden, dass die damit bewirkte Längenzunahme des Rohres ausgeglichen wird.

Unter aliphatischen Polyamiden der Erfindung werden verstanden Polyamide aus dem Grundbaustein Lactam oder $\omega$-Aminocarbonsäure mit mindestens fünf Kohlenstoffatomen pro Carbonamidgruppe, wie z.B. Polyamid 6 (Polycaprolactam), Polyamid 8 (Polysuberolactam), Polyamid 11 (Polyundecansäureamid) und insbesondere Polyamid 12 (Polylaurinlactam), ferner Polyamide aus äquivalenten Mengen aliphatischer Dicarbonsäuren und aliphatischer Diamine mit zusammen mindestens 12 Kohlenstoffatomen, wie z.B. Polyamid 66 (aus Hexamethylendiamin und Adipinsäure), Polyamid 68 (aus Hexamethylendiamin und Korksäure), Polyamid 69 (aus Hexamethylendiamin und Azelainsäure), Polyamid 610 (aus Hexamethylendiamin und Sebazinsäure), Polyamid 612 (aus Hexamethylendiamin und Decandicarbonsäure).

Die Polyamide enthalten, soweit erforderlich, übliche Hilfsstoffe, wie Stabilisatoren und/oder Alterungsschutzmittel. Sie können auch andere Zuschlagstoffe, wie Farbpigmente enthalten. Gegebenenfalls können die Polyamide auch Weichmacher enthalten. Geeignete Weichmacher sind im vorliegenden Falle z.B. Derivate aromatischer Sulfonsäureamide oder der 4-Hydroxybenzoesäure, insbesondere N-Butylbenzolsulfonsäureamid oder 4-Hydroxybenzoesäureoctylester. Sie können für den vorliegenden Fall in Mengen bis zu 20 Gewichtsprozent, insbesondere von 2 bis 10 Gewichtsprozent in der Gesamtformmasse enthalten sein. Mit anderen Worten besteht eine solche weichgemachte Polyamidmasse aus bis zu 80 Gewichtsprozent Polyamid und bis zu 20 Gewichtsprozent Weichmacher und zusätzlich aus den üblichen Hilfsstoffen. Copolyamide mit geringen Mengen an Comonomeren sind nicht ausgeschlossen, soweit sie für den vorgesehenen Verwendungszweck geeignet sind.

Die Herstellung des Rohres geschieht in herkömmlicher Weise mit Hilfe eines Extruders mit Rohrkopf, einer Kalibriervorrichtung, einem Kühlwassertank und einer Abzugsvorrichtung. Die an der Ringdüse des Rohrkopfes, entsprechend der Schmelztemperatur der Polyamide, mit einer Temperatur zwischen 180 und 280° C austretende Polyamidschmelze wird in der Kalibrierung geformt, wobei ein gegenüber dem Solldurchmesser definiertes Übermass eingestellt wird. Anschliessend wird das Rohr im Wassertank abgekühlt und dabei fixiert.

Es ist nach dem Stand der Technik auch bekannt, das warmplastische Hohlprofil zunächst mit dem etwa 1,3fachen des gewünschten Durchmessers zu extrudieren und diesen warmplastischen Schlauch in eine Kalibriervorrichtung einzuführen, die sich in einem Wasserbad befindet. In dieser Kalibriervorrichtung wird der warmplastische Schlauch auf den gewünschten kleineren Durchmesser gebracht und gleichzeitig abgekühlt. Dabei hat die Kalibriervorrichtung einen etwas grösseren Durchmesser als den gewünschten Rohrdurchmesser (Kirk-Othmer, Encyclopedia of Chemical Technology, 2. Auflage, Band 16, Seite 99). Derartige Hohlprofile sind nicht masshaltig gegenüber Kraftstoffen; sie erfahren eine unerwünschte Längenausdehnung bei Berührung mit derartigen Kraftstoffen.

Nach der Erfindung wird das abgekühlte, fixierte Rohr, das ein Übermass gegenüber dem Sollmass des Durchmessers besitzt mit Hilfe einer Abzugsvorrichtung in eine zweite Kalibriereinrichtung eingeführt und dort auf den Solldurchmesser eingestellt. Dies geschieht ohne äussere Wärmezufuhr (adiabatisch).

Die zweite Kalibrierung ist vorteilhafterweise eine Scheibenkalibrierung, die entgegen dem zitierten Stand der Technik einen etwas kleineren Durchmesser als den Solldurchmesser des Rohres hat.

Das notwendige Übermass des Rohres vor dem zweiten Kalibriervorgang richtet sich nach den Verarbeitungsbedingungen, der Zusammensetzung der Polyamidformmasse und in einem gewissen Masse nach dem Medium, für das die Leitung bestimmt ist und kann entsprechend eingestellt werden. Das Übermass gegenüber dem Solldurchmesser kann 5 bis 20%, insbesondere 10 bis 15% betragen.

Die Kühlwassertemperatur und die Kühlbadlänge ist nicht kritisch, die Temperatur sollte nur annähernd konstant gehalten werden. Beim Durchführen des kalten Rohres durch die zweite Kalibriervorrichtung erwärmt sich dieses etwas. Dadurch entsteht eine gewisse elastische Rückstellung des Durchmessers nach dem Kalibriervorgang. Danach kann das Rohr zur Abkühlung noch einmal durch ein Kühlwasserbad geführt werden. Die eingebrachten Longitudinalspannungen bleiben im Rohr erhalten.

Der Innendurchmesser der zweiten Kalibriervorrichtung muss deshalb kleiner sein als der angestrebte Solldurchmesser des Rohres. Im allgemeinen ist dieser Innendurchmesser 2 bis 15%, vorzugsweise 5 bis 10% kleiner als der Solldurchmesser.

*Beispiele*

Mit einem Einschneckenextruder mit Rohrkopf werden ein Rohr nach dem Verfahren der Erfindung (Beispiel 1,1) und ein Rohr nach einem Verfahren des Standes der Technik (Vergleichsbeispiel 1,2) aus stabilisiertem Polyamid 12 hergestellt.

Für beide Fälle hat der Extruder einen Zylinderinnendurchmesser von 45 mm, ein Verhältnis von Zylinderlänge: Innendurchmesser von 25 und ist mit einer Dreizonenschnecke mit dem Gangtiefenverhältnis von 3:1 ausgerüstet. Die Düse des Rohrkopfes hat einen Aussendurchmesser von 16 mm und einen Innendurchmesser von 12 mm. Alle Heizungen des Extruders sind auf 240° C eingestellt. Die Drehzahl der Förderschnecke beträgt 50/min.

Nach dem Beispiel 1,1 (Erfindung) wird die aus der Düse des Rohrkopfes austretende Schmelze in das Kalibrierrohr einer Vakuumkalibriervorrichtung mit dem Innendurchmesser von 9,5 mm geführt. Der Unterdruck in der Vakuumkalibriervorrichtung beträgt 0,36 bar. Dabei entsteht ein Rohr mit einem Aussendurchmesser von 9,0 mm und einer Wanddicke von 1 mm. Dieses wird in einem 4 m langen Kühlwasserbad abgekühlt und fixiert. Danach wird dieses abgekühlte Rohr durch eine zweite Kalibriervorrichtung mit einem Innendurchmesser von 7,5 mm hindurchgeführt. Dabei stellt sich unter adiabatischer Erwärmung der Solldurchmesser des Rohres von 8 mm bei 1 mm Wanddicke ein. Danach wird das Rohr mit einem Raupenabzug abgezogen und auf Länge geschnitten.

Nach dem Vergleichsbeispiel 1,2 wird die aus der Düse des Rohrkopfes austretende Schmelze in das Kalibrierrohr einer Vakuumkalibriervorrichtung mit einem Innendurchmesser von 8,5 mm geführt. Dabei entsteht bei einem Unterdruck von 0,25 bar ohne einen zweiten Kalibrierschritt, das Rohr mit den Sollmassen 8 mm Aussendurchmesser und 1 mm Wanddicke. Dieses wird in einem 4 m langen Kühlwasserbad abgekühlt, mit dem Raupenabzug abgezogen und danach auf Länge geschnitten.

In analoger Weise werden die Beispiele 2,1 bis 8,1 und die Vergleichsbeispiele 2,2 bis 8,2 ausgeführt. Dabei wird ein stabilisiertes Polyamid 11 (2,1 bzw. 2,2), ein 8% Weichmacher enthaltendes, stabilisiertes Polyamid 12 (3,1 bzw. 3,2), ein Polyamid 612 (4,1 bzw. 4,2), ein Polyamid 68 (5,1 bzw. 5,2), ein Polyamid 6 (6,1 bzw. 6,2), ein stabilisiertes Polyamid 12 (bei einem anderen Übermass vor der Nachkalibrierung) (7,1 bzw. 7,2) und ein 14% Weichmacher enthaltendes, stabilisiertes Polyamid 12 (8,1 bzw. 8,2) eingesetzt.

In der folgenden Tabelle sind die Versuchsergebnisse zusammengestellt. D bedeutet den Durchmesser des Kalibrierrohres der ersten Kalibriervorrichtung, d den Durchmesser der Kalibrierscheibe der Nachkalibrierung.

Die so hergestellten Rohre wurden auf eine Länge von 2000 mm zugeschnitten und mit Kraftstoffen folgender Bezeichnung gefüllt:

M 15-VK, M 100-VK, Super-VK, Normal-VK.

(Die Bezeichnung VK bedeutet im vorliegenden Fall Vergaserkraftstoff, M 15 bzw. M 100 bedeuten einen Gehalt von 15 bzw. 100% Methanol, Super-VK und Normal-VK sind handelsübliche Kraftstoffe nach DIN 51 600. Diese Kraftstoffe können aber auch für Einspritzmotoren verwendet werden).

Die eingefüllten Kraftstoffe wurden periodisch erneuert, um mit der Praxis vergleichbare Prüfbedingungen zu erhalten.

Es wurde die Längenänderung der Rohrabschnitte in Abhängigkeit von der Einwirkungsdauer bestimmt. Die Ergebnisse sind in den beigefügten Diagrammen 1 bis 14 dargestellt.

*Tabelle*

| Versuch | D mm | d mm | Rohrdurchmesser (mm) | |
| --- | --- | --- | --- | --- |
| | | | nach D | nach d |
| 1,1 | 9,5 | 7,5 | 9,0 | 8,0 |
| 1,2 | 8,5 | — | 8,0 | — |
| 2,1 | 9,3 | 7,5 | 9,0 | 8,0 |
| 2,2 | 8,5 | — | 8,0 | — |
| 3,1 | 8,8 | 7,6 | 8,5 | 8,0 |
| 3,2 | 8,5 | — | 8,0 | — |
| 4,1 | 9,5 | 7,5 | 9,0 | 8,0 |
| 4,2 | 8,5 | — | 8,0 | — |
| 5,1 | 9,0 | 7,5 | 8,5 | 8,0 |
| 5,2 | 8,5 | — | 8,0 | — |
| 6,1 | 9,5 | 7,5 | 9,0 | 8,0 |
| 6,2 | 8,5 | — | 8,0 | — |
| 7,1 | 9,3 | 7,5 | 8,8 | 8,0 |
| 7,2 | 8,5 | — | 8,0 | — |
| 8,1 | 7,0 | 5,6 | 6,7 | 6,0 |
| 8,2 | 6,4 | — | 6,0 | — |

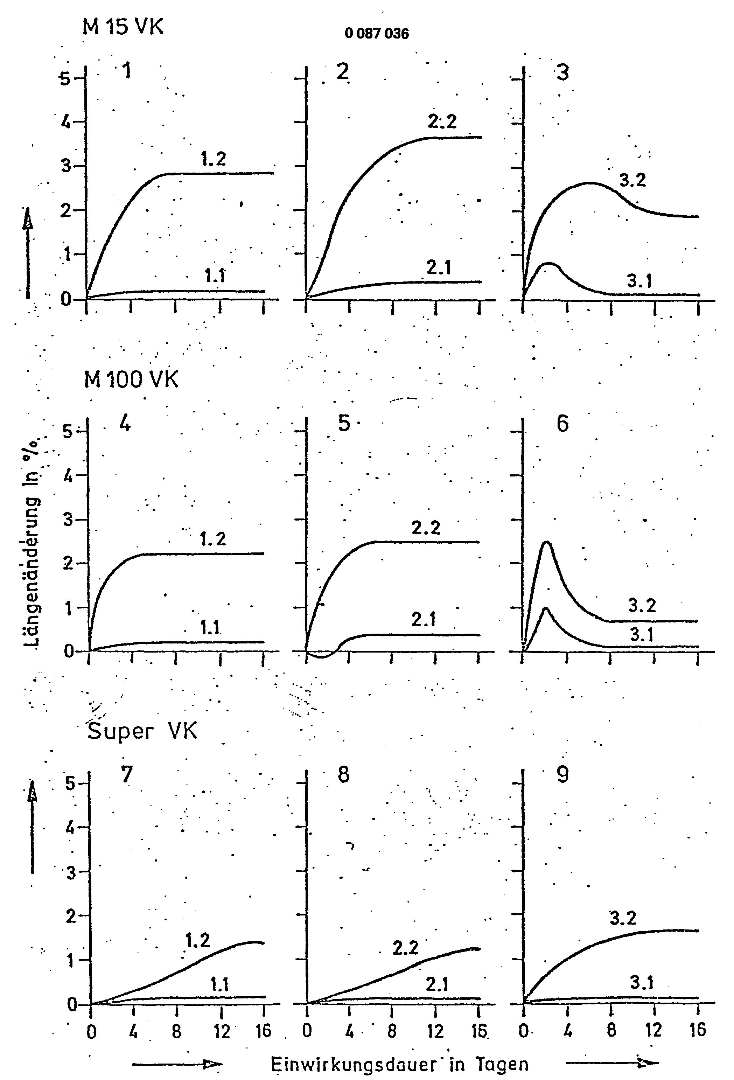

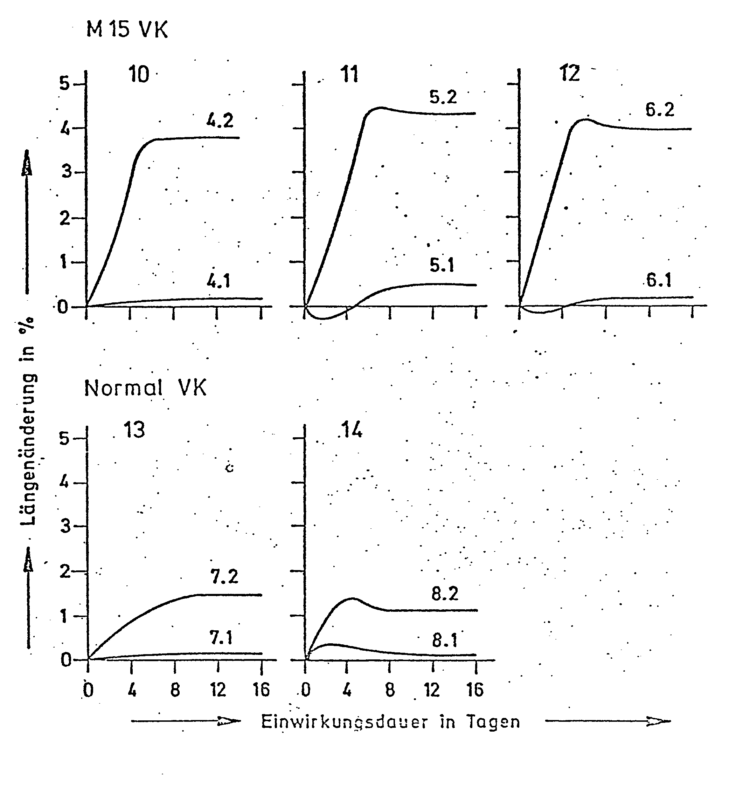

## Patentanspruch

Verfahren zur Herstellung von masshaltigen Rohren zur Förderung von Kraftstoffen, alkoholhaltigen Kraftstoffen oder Alkohol als Kraftstoff für Verbrennungsmotoren aus gegebenenfalls weichgemachten aliphatischen Polyamiden mit mindestens fünf Kohlenstoffatomen pro Carbonamidgruppe oder aus äquivalenten Mengen der Grundbausteine aliphatischer Dicarbonsäuren und aliphatische Diamine mit zusammen mindestens 12 Kohlenstoffatomen, durch Extrudieren, dadurch gekennzeichnet, dass man die Polyamidschmelze zunächst zu einem Rohr mit einem über dem Sollmass liegenden Durchmesser extrudiert, diesen Durchmesser des Rohres durch Kalibrieren und Abkühlen fixiert, das abgekühlte Rohr durch eine zweite Kalibriereinrichtung mit einem kleineren Kaliber als dem Solldurchmesser des Rohres ohne äussere Wärmezufuhr hindurchleitet, so dass die dabei eingebrachten Longitudinalspannungen beim Gebrauch durch die eindiffundierenden Kraftstoffbestandteile gerade soweit aufgehoben werden, dass die damit bewirkte Längenzunahme des Rohres ausgeglichen wird.

## Claim

Process for producing a dimensionally accurate pipe for conveying fuels, alcohol-containing fuels or alcohol as a fuel for internal combustion engines by means of extrusion from an optionally plasticised aliphatic polyamide of at least five carbon atoms per carbonamide group, or from equivalent quantities of the basic modules of aliphatic dicarboxylic acid and aliphatic diamine with together at least twelve carbon atoms, characterized in that the polyamide melt is first extruded to form a pipe having a diameter above the nominal size, this diameter of the pipe is fixed by means of calibration and cooling, and the cooled pipe is passed through a second calibrating device having a smaller bore than the nominal diameter of the pipe, without an external supply of heat, so that the longitudinal stresses introduced thereby are cancelled, during the use, by the fuel constituents diffusing into it, precisely to the extent that the increase in length of the pipe consequently caused is compensated.

## Revendication

Procédé de fabrication par extrusion de tubes de dimensions prescrites pour le transport de carburants, de carburants contenant de l'alcool, ou d'alcool en tant que carburant pour moteurs à combustion interne, en partant de polyamides aliphatiques éventuellement plastifiées contenant au moins cinq atomes de carbone par groupe carboxamide ou de quantités équivalentes des constituants fondamentaux d'acides dicarboxyliques aliphatiques et de diamines aliphatiques contenant ensemble au moins 12 atomes de carbone, caractérisé par le fait que l'on extrude tout d'abord la polyamide fondue en un tube d'un diamètre supérieur à la mesure prescrite, que l'on fixe ce diamètre du tube par calibrage et refroidissement, que l'on fait passer le tube refroidi par un deuxième dispositif de calibrage ayant un calibre plus petit que le diamètre prescrit du tube, sans apport extérieur de chaleur, de sorte que les contraintes longitudinales ainsi introduites sont supprimées lors de l'utilisation, par les constituants du carburant qui diffusent dans le tube, précisément dans une mesure telle que l'accroissement de longueur ainsi donné au tube soit compensé.

**0 087 036**

Längenänderung in %

M 15 VK

M 100 VK

Super VK

Einwirkungsdauer in Tagen

M 15 VK

Normal VK

Längenänderung in %

Einwirkungsdauer in Tagen

7